# EUROPEAN PATENT SPECIFICATION

(11) **EP 2 390 139 B1**
(45) Date of publication and mention of the grant of the patent: **19.12.2012**
(21) Application number: 10164443.3
(22) Date of filing: 31.05.2010
(51) Int. Cl.: B60Q 3/04

(54) **Interior lighting and illumination control**
Innenbeleuchtung und Beleuchtungssteuerung
Éclairage intérieur et contrôle de l'éclairage

(43) Date of publication of application: 30.11.2011
(73) Proprietor: Volvo Car Corporation, 405 31 Göteborg (SE)
(72) Inventor: Brandin, Magnus, 43734 Lindome (SE); Rothoff, Marcus, 41729 Göteborg (SE)
(74) Representative: Widahl, Jenny Marie

(56) References cited:
- DE-A1-102005 023 697
- DE-A1-102007 005 028
- DE-A1-102007 049 710

## Description

### TECHNICAL FIELD

The present invention relates to a method and device for highlighting a specific area of interest among a number of areas of interest within the interior of a vehicle. The invention further relates to a vehicle provided with such a device.

### BACKGROUND OF THE INVENTION

In vehicles, more particularly within the interior of vehicles, it is at present possible to activate a unit from not active status to active status. The unit can e.g. be represented by a sound system or an A/C unit within the interior. Via a camera within the interior which monitors a driver's eye, it can be determined which unit within the interior that is being viewed by the driver. Upon said determination the unit can thus be activated. In order to activate the unit, the driver must know beforehand where to look. The activation of a unit from a non active state to an active state is therefore performed under such conditions that the driver knows beforehand where to look, and that the unit beforehand is visible for the driver due to e.g. internal illumination or that the unit comprises illuminated components visible to the driver. Once the unit is activated, the driver can manually adjust or regulate the unit. In modern vehicles regulation of the unit is normally performed by control elements provided e.g. on the steering wheel.

That a unit beforehand is visible for a driver of the vehicle means that the unit either is exposed to light from the interior, or that the unit can transmit light directly to a viewer in order to make the unit visible for the driver. Such exposure or transmitting of light during darkness can therefore have an influence of the driver's scotopic vision. The reduced or influenced scotopic vision can therefore directly affect how well and how quickly a driver can discover an animal or other object in front of the vehicle when driving during darkness, e.g. at night, dawn or dusk. A method and device for highlighting a specific area of interest among a number of areas of interest within the interior of a vehicle according to the preamble of claim 1 and claim 6 respectively is disclosed in DE 10 2005 023 697 A1.

### SUMMARY OF THE INVENTION

It is therefore an object of the invention to provide a method and device by means of which unnecessary distractions of the driver of a vehicle can be reduced and preferably eliminated.

Another object of the invention is to provide a method and device by means of which a driver's scotopic vision is not unduly impaired by internal lightening or illumination of components or units within the interior of the vehicle.

Another object is to provide a method and device which reduces distractions caused by light from different areas of interest within the interior of the vehicle for a driver when driving as well as when the driver is not searching for information.

Aforesaid and other objects are achieved by means of the method and the device in accordance with the independent claims.

An advantage achieved by the features as described in the independent claims is that the scotopic vision of a person, e.g. the driver, within the interior of the vehicle is not impaired by internal lightning of different active units or elements within the interior.

Another advantage achieved by the features as described in the independent claims is that a driver, once he or she has been made aware of the information available, can decide whether the luminous intensity of the selected information is to be increased, whereby the attention of the driver towards the selected information is increased.

The meaning of information which is searched for or is available for a person within the vehicle is, for the purposes of this disclosure, to be interpreted as meaning what is displayed and provided within an area of interest. An area of interest can e.g. comprise information regarding the temperature within the vehicle. Another area of interest can e.g. comprise information relating to a sound system as well as buttons or components for regulating the sound system. Accordingly, the meaning of information within an area of interest therefore embraces not only text and figures, but also components or elements of a device or unit which provides information to the viewer pertaining to their existence and possibility for using or regulating.

Further embodiments of the invention are detailed in the dependent claims.
In accordance with an aspect, the first level of luminous intensity is maintained for a second predetermined period of time. This has the effect that a person within the vehicle can look at the illuminated area of interest and decide if it can comprise information which he or she is searching for.

In accordance with an aspect, the first level of luminous intensity is reduced after being maintained for the second predetermined period of time. In other words, since the viewer has not retained his or her sight on that particular possible area of interest, it may be assumed that that particular area does not contain any information which is presently of interest for the viewer. The illumination of the gazed area of interest is therefore reduced. A further effect is that the scotopic vision of the driver is improved when the luminous intensity within the vehicle is reduced when driving in darkness.

In accordance with an aspect, the illumination of the luminous intensity to a first or second level, or to a first and second level, is a continuous increase. Accordingly, any change of luminous intensity is performed continuously. This has the effect that when an area of interest is being illuminated it shall be apprehended by the driver as something which is not indicative of an alarm signal. The continuous increase of luminous intensity to a first level of the area of interest shall provide enough light for a sufficiently long period in order for the viewer to be able to determine if the area of interest comprises information which he or she was searching for. A further effect of the continuous increase of luminous intensity to a second level is that the viewer, e.g. the driver, is directly and quickly made aware of the information that in detail is disclosed in that area. That area of interest which has been illuminated to a second level is now interpreted as a specific area of interest.

In accordance with an aspect, areas of interest which are illuminated to the first level of luminous intensity reduce their level of illumination when a specific area of interest is illuminated to a second level of luminous intensity. This has the effect that the viewer is able to obtain information which he or she has sought from one destination or location at a time within the interior of the vehicle. When it is only the specific area of interest which is illuminated, it is immediately apparent to the driver where his or her attention is to be directed. As there is no other disturbing sources of light within the vehicle, the driver will only have to pay attention to the one illuminated area of interest, apart from the driving of the vehicle. After a predetermined time, or when the viewer moves his or her eye gaze direction away from the specific area of interest, the luminous intensity of the specific area of interest is reduced.

The above illumination and level of luminous intensity are configured by a processor to feed a regulating means with information and instructions on how to control and perform the illumination and level of luminous intensity.

### BRIEF DESCRIPTION OF THE DRAWINGS

An embodiment of the method and device according to the invention will be described in more detail below by way of example only and with reference to the attached drawings, in which:
Fig. 1 is a schematic view of an interior of a vehicle illustrating an eye gaze direction of a driver within said interior;
Fig. 2 is a view of a vehicle for performing the method of the present invention;
Fig. 3 is a view of part of vehicle illustrating the interior with different eye gaze directions towards different areas of interest, and
Fig. 4 is a schematic view of a flow chart for executing the method of the invention.

### DETAILED DESCRIPTION OF PREFERRED EMBODIMENTS

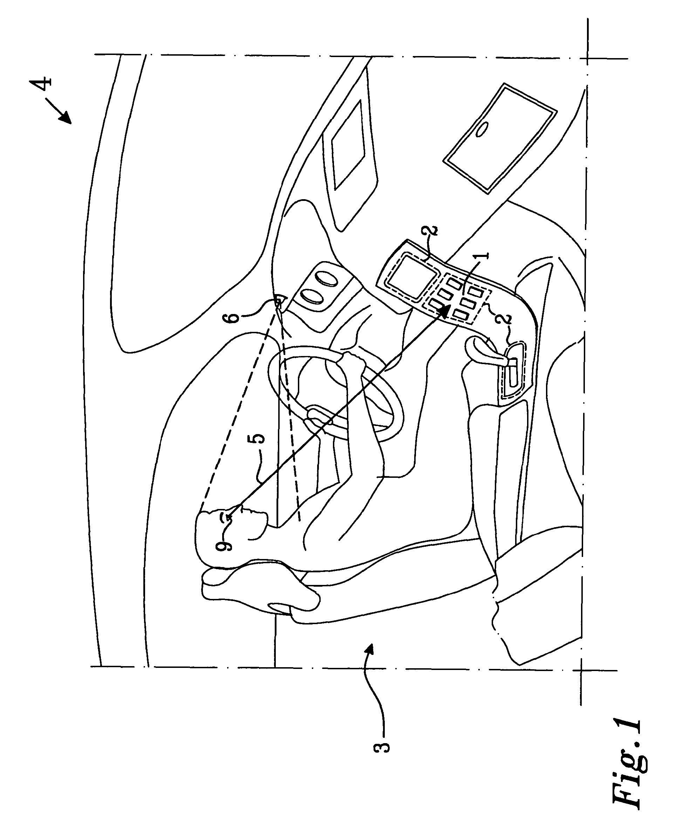

Fig. 1 is a schematic view displaying a specific area of interest 1 among a number of areas of interest 2 within the interior 3 of a vehicle 4. An eye gaze direction 5 from a person, e.g. a driver, is determined by a camera 6 mounted in the interior 3.

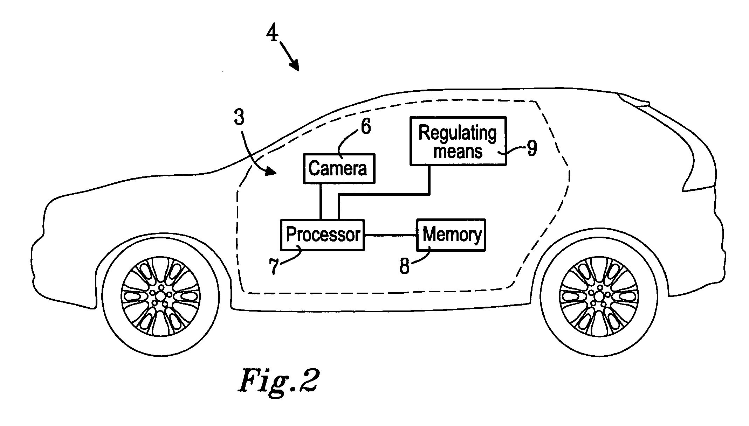

Fig. 2 shows a view of a vehicle 4 with an interior 3. The vehicle 4 is equipped with an eye monitoring system as far as the present invention is concerned, which comprises the camera 6, a processor 7, a memory 8 and regulating means 9. The camera 6 is configured to obtain information relating to an eye gaze direction 5, see Fig. 1, from a person within the vehicle 4. The processor 7 is configured to communicate with the camera 6. The communication with the camera 6 is such that the processor 7 receives information obtained by the camera 6. The processor 7 is further configured to process the information from the camera 6 whereby it can be ascertained whether any area of interest 2 is being viewed. The information from the camera 6 comprises a reflection of what is being obtained or captured by the camera in its viewing direction. This information from the camera 6 is suitably in a digital format. The memory 8 is configured to store information relating to each area of interest 2 within the interior 3 of the vehicle 4. Such information can be loaded in to the memory 8 from an external processor or communication device, e.g. by connecting the memory 8 to a cellular phone. This has the advantage that the memory 8 can be upgraded, e.g. in the event that there is a change in the number of the areas of interests 2 within the vehicle 4. The memory 8 is further configured to communicate with the processor 7. Upon processing the information from the camera 6 in the processor, the processor 7 compares the processed information with the areas of interest stored in the memory 8. The comparison results in a determination of which area of interest 2 within the interior 3 the eye gaze direction 5 is directed towards. Upon the determination of which area of interest 2 is being viewed, the processor 7 feeds instructions to the regulating means 9. The regulating means 9 is then configured to regulate the luminous intensity of each area of interest 2 which is being viewed.

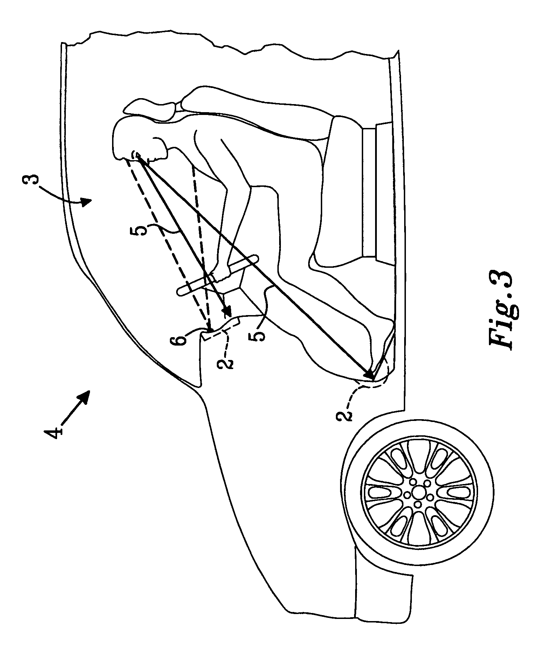

Fig. 3 shows an embodiment of the invention in which areas of interest 2 within the interior 3 of the vehicle 4 are located on the instrument panel, adjacent the steering wheel, and at an area adjacent the feet of the driver. Any location within the interior 3 of the vehicle 4 which could advantageously be illuminated could be determined as constituting an area of interest and thus be stored in the memory 8, see Fig. 2.

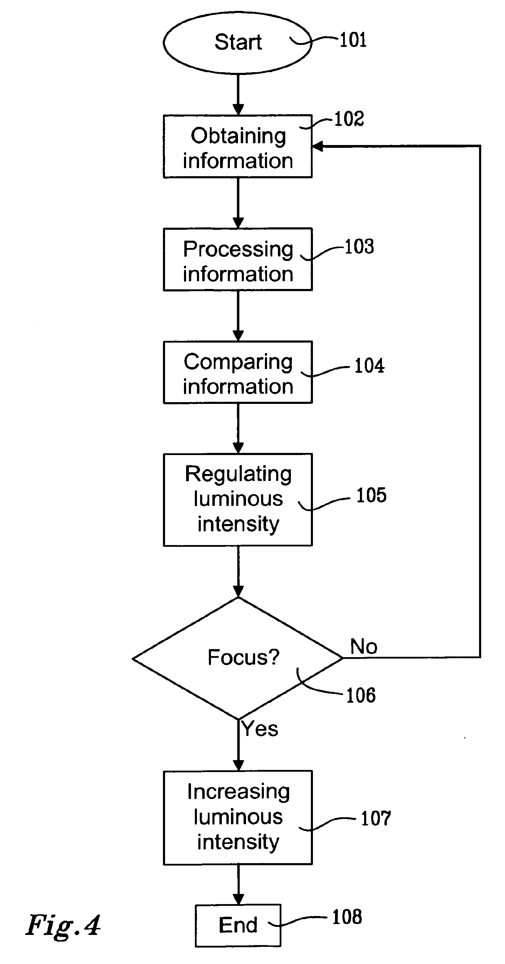

Fig. 4 is a schematic view of a flow chart for executing the method of the invention. With reference to Fig. 4, the method will henceforth be explained in greater detail.

In the first step, start 101, a person, e.g. a driver, is positioned in the interior 3 of the vehicle 4. At this first step 101, areas of interest 2 are in a non active mode or in a stand-by mode. As far as the present invention is concerned, being in such modes means that the areas of interest 2 do not provide any luminous intensity to the interior 3. Alternatively, the luminous intensity may have such a low level that it does not reduce the scotopic vision of the driver when driving in darkness.

During the second step, obtaining information 102, the camera 6 within the interior 3 is configured to obtain information relating to an eye gaze direction 5, see Fig. 1, of the driver. The camera 6 is located within the interior 3 such that it is directed towards an eye of the driver whereby the eye gaze direction 5 from the eye can be obtained by the camera 6. The obtained information from the camera 6 is communicated and fed to the processor 7.

During the third step, processing information 103, the information obtained by the camera 6 is fed to the said processor 7 and the information from the camera 6 relating to the eye gaze direction 5 is processed in the processor 7. Upon processing of this information it is established which area of interest 2 the eye gaze direction 5 is directed towards. Each direction, or change, of the eye gaze direction 5 results in a new processing step for each direction in the processor 7. The driver can e.g. scan with his or her eye gaze direction 5 over different areas of interest 2 when searching for a particular area of interest 2. Scanning therefore results in a number of different eye gaze directions 5 being obtained by the camera 6 and processed in the processor 7.

In this disclosure "scanning" means that the eye gaze direction moves from one area of interest to another area of interest without remaining within an area of interest for a period of time exceeding a predetermined time.

In the fourth step, comparing information 104, each block of processed information of each eye gaze direction 5 obtained from the camera 6 is compared with information relating to each area 2 of interest stored within the memory 8. Upon a match between the processed information from the camera 6 and the information stored in the memory 8, it is determined which area of interest 2 each eye gaze direction 5 is directed towards. Any such match generates a signal from the processor 7 which is fed to the regulating means 8.

The fifth step of regulating luminous intensity 105 includes increasing luminous intensity to a first level of luminous intensity of each area of interest 2 which has been detected by the processor 7 to correspond to each eye gaze direction 5 upon scanning. The first level of luminous intensity is maintained for a second predetermined period of time. The second predetermined period of time is set to correspond to the time needed for a viewer to determine whether he or she would find the information pertaining to that area of interest of such interest that further information from that area of interest 2 is desired.

The sixth step, focus 106, comprises determination of whether or not the eye gaze direction 5 remains for a first predetermined period of time within an area of interest 2. If the eye gaze direction 5 remains within an area of interest 2 for a period of time which does not exceed the first predetermined period of time, that area of interest 2 is illuminated to a first level of luminous intensity and the processor 7 determines this as no focus having occurred and the illumination is reduced.

Thereafter, the method steps of Fig. 4 are repeated starting from the second step, 102. The repetition of the steps from the second step 102 to the sixth step 106 is performed until it is determined that focus occurs within an area of interest 2, or upon the viewer stopping searching for information within the areas of interest 2. Focus is determined if the eye gaze direction 5 remains within an area of interest 2 for a period of time which corresponds to or exceeds the first predetermined period of time. That area of interest 2 is interpreted by the processor 7 as focus occurring, whereby that area of interest 2 becomes a specific area of interest 1. Upon determination of focus occurring, the processor 7 feeds information to the regulating means 9 for controlling the luminous intensity of the specific area of interest 1.

In the seventh step, increasing luminous intensity 107, focus according to the sixth step 106 has been determined and the specific area of interest 1 is increasingly illuminated from the first level of luminous intensity to a second level of luminous intensity. The increase is preferably a continuous increase. The second level of luminous intensity is higher than the first level of luminous intensity. Upon increase, or when the luminous intensity has reached the second level of luminous intensity, other areas of interest 2 apart from the specific area of interest 1 then have their luminous intensity reduced. The luminous intensity at the second level is maintained for a third predetermined period of time.

At the eighth step, end 108, once the third predetermined period of time has expired, illumination of the specific area of interest 1 is reduced from the second level of luminous intensity to a level of non-active mode or stand-by mode, see first step 101. Alternatively, the illuminated specific area of interest 1 can have its illumination reduced to the first level of luminous intensity as described in the fifth step 105.

The first, second and third predetermined periods of time are each stored in the processer 7. The length of the respective predetermined periods of time can be adjusted or varied in the processor 7.

The above described method and device are not limited to the embodiments depicted but may be varied and modified within the scope of the appended claims.

## Claims

1. Method for highlighting a specific area of interest (1) among a number of areas of interest (2) within an interior (3) of a vehicle (4), said method comprising the steps of:
- monitoring an eye of driver of said vehicle (4) to determine an eye gaze direction (5);
- determining whether said eye gaze direction is directed towards one of said number of areas of interest (2); and
- in the event that said eye gaze direction is directed towards one of said number of areas of interest (2), illuminating said one of said number of areas of interest (2) to a first level of luminous intensity;
**characterised by** the steps of
- determining whether said eye gaze direction (5) remains directed towards said one of said number of areas of interest (2) for longer than a first predetermined period of time; and
- in the event that said first predetermined period of time is exceeded, illuminating said one of said number of areas of interest to a second level of luminous intensity higher than said first level,
whereby said one said number of areas of interest corresponds to said specific area of interest (1).

2. Method according to claim 1, **characterised by** maintaining the first level of luminous intensity for a second predetermined period of time.

3. Method according to claim 2, **characterised by** reducing the first level of luminous intensity after having been maintained for said second predetermined period of time.

4. Method according to any of claims 1 - 3, **characterised in that** any change of luminous intensity is performed continuously.

5. Method according to any of claims 1 - 4, **characterised by** reducing the illumination of any of said number of areas of interest (2) which are illuminated to the first level of luminous intensity when a specific area of interest (1) is illuminated to a second level of luminous intensity.

6. A device for highlighting a specific area (1) of interest among a number of areas of interest (2) within the interior (3) of a vehicle (4), said device comprising:
- a camera (6) configured to obtain information for determination of an eye gaze direction (5) from an eye of driver of said vehicle (4),
- a processor (7) configured to process the information obtained from the camera (6),
- a memory (8) having at least one of said area of interest (2) relating to said number of areas of interest (2) stored,
- a regulating means (9) configured to regulate a luminous intensity of at least one area of interest (2),
- wherein the processor (7) is configured to compare the information of the eye gaze direction (5) towards an area of interest (2) with stored areas of interest (2) from the memory (8) to obtain a determination of which area of interest (2) is being viewed and detected, and to control the regulating means (9), based on said determination, to regulate the luminous intensity of said at least one detected area of interest (2) to a first level,
**characterised in that**
the processor (7) is configured to detect whether the eye gaze direction (5) within a specific area of interest (1) among the number of areas of interest (2) remains within said specific area of interest (1) for a first predetermined time, and to control the regulating means (9) to regulate the luminous intensity to a second level higher than said first level of said specific area of interest (1) if said first predetermined time is exceeded.

7. A device according to claim 6, **characterised in that** the processor (7) is configured to control the regulating means (9) to maintain the first level of luminous intensity for a second predetermined period of time.

8. A device according to claim 7, **characterised in that** the processor (7) is configured to control the regulating means (9) to maintain the first level of luminous intensity for said second predetermined period of time.

9. A device according to any of claims 6 - 8, **characterised in that** the processor (7) is configured to control the regulating means (9) such that any change of luminous intensity is performed continuously.

10. A device according to any of claims 6 - 9, **characterised in that** the processor (7) is configured to control the regulating means (9) to reduce the illumination of areas of interest (2) which are illuminated to the first level of luminous intensity when a specific area of interest (1) is illuminated to a second level of luminous intensity.

11. A vehicle provided with the device according to any one of claims 6 to 10.

## Patentansprüche

1. Verfahren zum Hervorheben eines spezifischen interessierenden Bereichs (1) unter einer Anzahl interessierender Bereiche (2) in einem Innenraum (3) eines Fahrzeugs (4), wobei das Verfahren die folgenden Schritte umfasst:
- Überwachen eines Auges des Fahrers des Fahrzeugs (4), um eine Blickrichtung (5) des Auges zu bestimmen;
- Bestimmen, ob die Blickrichtung des Auges auf einen der Anzahl interessierender Bereiche (2) gerichtet ist; und
- falls die Blickrichtung des Auges auf einen der Anzahl interessierender Bereiche (2) gerichtet ist, Beleuchten des einen der Anzahl interessierender Bereiche (2) mit einem ersten Pegel der Beleuchtungsintensität;
**gekennzeichnet durch** die folgenden Schritte
- Bestimmen, ob die Blickrichtung (5) des Auges länger als während eines ersten vorgegebenen Zeitraums auf den einen der Anzahl interessierender Bereiche (2) gerichtet ist; und
- falls der erste vorgegebene Zeitraum überschritten wird, Beleuchten des einen der Anzahl interessierender Bereiche mit einem zweiten Pegel der Beleuchtungsintensität, der höher als der erste Pegel ist,
wodurch der eine der Anzahl interessierender Bereiche dem spezifischen interessierenden Bereich (1) entspricht.

2. Verfahren nach Anspruch 1, **gekennzeichnet durch** das Aufrechterhalten des ersten Pegels der Beleuchtungsintensität während eines zweiten vorgegebenen Zeitraums.

3. Verfahren nach Anspruch 2, **gekennzeichnet durch** das Verringern des ersten Pegels der Beleuchtungsintensität, nachdem er während des zweiten vorgegebenen Zeitraums aufrechterhalten worden ist.

4. Verfahren nach einem der Ansprüche 1-3, **dadurch gekennzeichnet, dass** jede Änderung der Beleuchtungsintensität kontinuierlich ausgeführt wird.

5. Verfahren nach einem der Ansprüche 1-4, **gekennzeichnet durch** das Verringern der Beleuchtung irgendeines der Anzahl interessierender Bereiche (2), die mit dem ersten Pegel der Beleuchtungsintensität beleuchtet werden, wenn ein spezifischer interessierender Bereich (1) mit einem zweiten Pegel der Beleuchtungsintensität beleuchtet wird.

6. Vorrichtung zum Hervorheben eines spezifischen interessierenden Bereichs (1) unter einer Anzahl interessierender Bereiche (2) in dem Innenraum (3) eines Fahrzeugs (4), wobei die Vorrichtung Folgendes umfasst:
- eine Kamera (6), die konfiguriert ist, Informationen für die Bestimmung einer Blickrichtung (5) eines Auges von einem Auge des Fahrers des Fahrzeugs (4) zu erhalten,
- einen Prozessor (7), der konfiguriert ist, die von der Kamera (6) erhaltenen Informationen zu verarbeiten,
- einen Speicher (8), in dem wenigstens einer der interessierenden Bereiche (2) bezüglich der Anzahl interessierender Bereiche (2) gespeichert ist,
- Regelmittel (9), die konfiguriert sind, die Beleuchtungsintensität wenigstens eines interessierenden Bereichs (2) zu regeln,
- wobei der Prozessor (7) konfiguriert ist, die Informationen über die Blickrichtung (5) des Auges zu einem interessierenden Bereich (2) mit den gespeicherten interessierenden Bereichen (2) aus dem Speicher (8) zu vergleichen, um eine Bestimmung zu erhalten, welcher interessierende Bereich (2) betrachtet und detektiert wird, und die Regelmittel (9) basierend auf der Bestimmung zu steuern, die Beleuchtungsintensität des wenigstens einen detektierten interessierenden Bereichs (2) auf einen ersten Pegel zu regeln,
**dadurch gekennzeichnet, dass**
der Prozessor (7) konfiguriert ist, zu detektieren, ob die Blickrichtung (5) des Auges innerhalb eines spezifischen interessierenden Bereichs (1) unter der Anzahl interessierender Bereiche (2) während eines ersten vorgegebenen Zeitraums innerhalb des spezifischen interessierenden Bereichs (1) verbleibt, und die Regelmittel (9) zu steuern, die Beleuchtungsintensität auf einen zweiten Pegel, der höher als der erste Pegel des spezifischen interessierenden Bereichs (1) ist, zu regeln, falls der erste vorgegebene Zeitraum überschritten ist.

7. Vorrichtung nach Anspruch 6, **dadurch gekennzeichnet, dass** der Prozessor (7) konfiguriert ist, die Regelmittel (9) zu steuern, den ersten Pegel der Beleuchtungsintensität während eines zweiten vorgegebenen Zeitraums aufrechtzuerhalten.

8. Vorrichtung nach Anspruch 7, **dadurch gekennzeichnet, dass** der Prozessor (7) konfiguriert ist, die Regelmittel (9) zu steuern, den ersten Pegel der Beleuchtungsintensität während des zweiten vorgegebenen Zeitraums aufrechtzuerhalten.

9. Vorrichtung nach einem der Ansprüche 6-8, **dadurch gekennzeichnet, dass** der Prozessor (7) konfiguriert ist, die Regelmittel (9) zu steuern, so dass jede Änderung der Beleuchtungsintensität kontinuierlich ausgeführt wird.

10. Vorrichtung nach einem der Ansprüche 6-9, **dadurch gekennzeichnet, dass** der Prozessor (7) konfiguriert ist, die Regelmittel (9) zu steuern, die Beleuchtung der interessierenden Bereiche (2), die mit dem ersten Pegel der Beleuchtungsintensität beleuchtet werden, zu verringern, wenn ein spezifischer interessierender Bereich (1) mit einem zweiten Pegel der Beleuchtungsintensität beleuchtet wird.

11. Fahrzeug, das mit der Vorrichtung nach einem der Ansprüche 6 bis 10 versehen ist.

## Revendications

1. Procédé pour mettre en évidence une zone d'intérêt spécifique (1) parmi un certain nombre de zones d'intérêt (2) à l'intérieur d'un habitacle (3) d'un véhicule (4), ledit procédé comprenant les étapes consistant à :
- surveiller un oeil du conducteur dudit véhicule (4) pour déterminer une direction du regard de l'oeil (5) ;
- déterminer si ladite direction du regard de l'oeil est dirigée vers une dudit nombre de zones d'intérêt (2) ; et
- dans le cas où ladite direction du regard de l'oeil est dirigée vers une dudit nombre de zones d'intérêt (2), à éclairer ladite une dudit nombre de zones d'intérêt (2) à un premier niveau d'intensité lumineuse;
**caractérisé par** les étapes consistant à
- déterminer si ladite direction du regard de l'oeil (5) reste dirigée vers ladite une dudit nombre de zones d'intérêt (2) pendant plus longtemps qu'une première période de temps prédéterminée ; et
- dans le cas où ladite première période de temps prédéterminée est dépassée, à éclairer ladite une dudit nombre de zones d'intérêt à un deuxième niveau d'intensité lumineuse plus haut que ledit premier niveau,
ce qui fait que ladite une dudit nombre de zones d'intérêt correspond à ladite zone d'intérêt spécifique (1).

2. Procédé selon la revendication 1, **caractérisé par** le maintien du premier niveau d'intensité pendant une deuxième période de temps prédéterminée.

3. Procédé selon la revendication 2, **caractérisé par** la réduction du premier niveau d'intensité lumineuse après qu'il a été maintenu pendant ladite deuxième période de temps prédéterminée.

4. Procédé selon l'une quelconque des revendications 1 à 3, **caractérisé en ce que** tout changement d'intensité lumineuse est exécuté de manière continue.

5. Procédé selon l'une quelconque des revendications 1 à 4, **caractérisé par** la réduction de l'éclairage de n'importe lesquelles dudit nombre de zones d'intérêt (2) qui sont éclairées au premier niveau d'intensité lumineuse lorsqu'une zone d'intérêt spécifique (1) est éclairée à un deuxième niveau d'intensité lumineuse.

6. Dispositif pour mettre en évidence une zone d'intérêt spécifique (1) parmi un certain nombre de zones d'intérêt (2) à l'intérieur de l'habitacle (3) d'un véhicule (4), ledit dispositif comprenant :
- une caméra (6) configurée pour obtenir des informations pour la détermination d'une direction de regard d'oeil (5) venant d'un oeil du conducteur dudit véhicule (4),
- un processeur (7) configuré de façon à traiter les informations obtenues de la caméra (6),
- une mémoire (8) dans laquelle est stockée au moins une desdites zones d'intérêt (2) se rapportant audit nombre de zones d'intérêt (2),
- un moyen de régulation (9) configuré de façon à réguler une intensité lumineuse d'au moins une zone d'intérêt (2),
- dans lequel le processeur (7) est configuré de façon à comparer les informations de la direction du regard de l'oeil (5) vers une zone d'intérêt (2) avec les zones d'intérêt (2) stockées venant de la mémoire (8) afin d'obtenir une détermination de quelle zone d'intérêt (2) est en train d'être regardée et détectée, et de façon à commander le moyen de régulation (9), en se basant sur ladite détermination, afin de réguler l'intensité lumineuse de ladite au moins une zone d'intérêt détectée (2) à un premier niveau,
**caractérisé en ce que**
le processeur (7) est configuré de façon à détecter si la direction du regard de l'oeil (5) à l'intérieur d'une zone d'intérêt spécifique (1) parmi le nombre de zones d'intérêt (2) reste à l'intérieur de ladite zone d'intérêt spécifique (1) pendant un premier temps prédéterminé, et de façon à commander le moyen de régulation (9) pour réguler l'intensité lumineuse à un deuxième niveau plus élevé que ledit premier niveau de ladite zone d'intérêt spécifique (1) si ladite première période de temps prédéterminée est dépassée.

7. Dispositif selon la revendication 6, **caractérisé en ce que** le processeur (7) est configuré de façon à commander le moyen de régulation (9) afin de maintenir le premier niveau d'intensité lumineuse pendant une deuxième période de temps prédéterminée.

8. Dispositif selon la revendication 7, **caractérisé en ce que** le processeur (7) est configuré de façon à commander le moyen de régulation (9) afin de maintenir le premier niveau d'intensité lumineuse pendant ladite deuxième période de temps prédéterminée.

9. Dispositif selon l'une quelconque des revendications 6 à 8, **caractérisé en ce que** le processeur (7) est configuré de façon à commander le moyen de régulation (9) de manière à ce que tout changement d'intensité lumineuse soit effectué de manière continue.

10. Dispositif selon l'une quelconque des revendications 6 à 9, **caractérisé en ce que** le processeur (7) est configuré de façon à commander le moyen de régulation (9) afin de réduire l'éclairage des zones d'intérêt (2) qui sont éclairées au premier niveau d'intensité lumineuse lorsqu'une zone d'intérêt spécifique (1) est éclairée à un deuxième niveau d'intensité lumineuse.

11. Véhicule pourvu du dispositif selon l'une quelconque des revendications 6 à 10.
